# EUROPEAN PATENT SPECIFICATION

(11) **EP 1 055 583 B1**
(45) Date of publication and mention of the grant of the patent: **27.08.2003**
(21) Application number: 00117411.9
(22) Date of filing: 24.09.1997
(51) Int. Cl.: B62D 5/083

(54) **Rack-pinion type power steering apparatus**
Servoventil für Zahnstangenlenkung
Direction assistée à crémaillère

(43) Date of publication of application: 29.11.2000
(62) Divisional of application: 97116572.5
(73) Proprietor: BOSCH BRAKING SYSTEMS Co., Ltd., Tokyo 150-0002 (JP)
(72) Inventor: Sonoda, Hirotetsu, Matsuyama Plant Jidosha Kiki Co, Higashimatsuyama-shi, Saitama-ken (JP); Tatsuya, Fukushima, Matsuyama Plant Jidosha Kiki, Higashimatsuyama-shi, Saitama-ken (JP)
(74) Representative: Maser, Jochen, Dipl.-Ing.

(56) References cited:
- EP-A- 0 059 657
- EP-A- 0 072 712
- EP-A- 0 903 280
- US-A- 4 501 191

## Description

### Background of the Invention

The present invention relates to a rack-pinion type power steering apparatus and, more particularly, to the support structure of a pinion shaft integrally formed with a sleeve serving as the outer valve member of a rotary type channel selector valve (rotary valve).

A rack-pinion type power steering apparatus is advantageous in that it is lightweight, has a comparatively simple arrangement, is excellent in steering performance, and requires a small space when being incorporated in a vehicle, and is accordingly among those which are often employed as power steering. Although many apparatuses having various structures are conventionally proposed as such a rack-pinion type power steering apparatus, they still have room for improvement in achieving downsizing and weight reduction of an automobile and making the apparatus compact.

For example the document US-A 4,501,191 discloses a rack-pinion type power steering apparatus comprising a cylindrical stub shaft which rotates in a steering body upon a steering operation, a torsion bar having one end fixed at one end of said stub shaft and extending through said stub shaft toward the other end of said stub shaft, a pinion shaft pivotally connected to the other end of said torsion bar, a rotor arranged to cover said torsion bar from said stub shaft along an extending direction of said torsion bar and a sleeve having one end integrally connected to said pinion shaft, extending from said pinion shaft along said stub shaft, and arranged around said rotor to constitute a rotary type channel selector valve between said rotor and said sleeve, wherin said steering body has a stepped hole whose inner diameter increases stepwise from one end to the other end of said steering body on a stub shaft side, and said pinion shaft, said torsion bar and said stub shaft are incorporated in said stepped hole, a plurality of portions in said stepped hole are pivotally supported and a set member is fixed to an opening end of said stepped hole, thereby obtaining an integrally assembled overall structure.

This document further discloses that the pinion shaft is pivotally supported in the stepped hole of the steering body by support portions, disposed at two radial portions and the support portion on the stub shaft side comprises a ball bearing whose outer ring is fixed by the set member.

The Document EP-A 903 280 discloses also a rack-pinion type power steering apparatus, which is prior art under Article 54(3) EPC.

This rack-pinion type power steering apparatus comprises
a cylindrical stub shaft which rotates in a steering body upon a steering operation;
a torsion bar having one end fixed at one end of the said stub shaft and extending through said stub shaft toward the other end of said stub shaft :
a pinion shaft pivotally connected to the other end of said torsion bar;
a rotor arranged to cover said torsion bar from said stub shaft along an extending direction of said torsion bar; and
a sleeve having one end integrally connected to said pinion shaft, extending from said pinion shaft along said stub shaft, and arranged around said rotor to constitute a rotary type channel selector valve between said rotor and said sleeve,
wherein said steering body has a stepped hole whose inner diameter increases stepwise from one end to the other end of said steering body on a stub shaft side, and
said pinion shaft, said torsion bar, said stub shaft are incorporated in said stepped hole, a plurality of portions in said stepped hole are pivotally supported, and a set member is fixed to an opening end of said stepped hole, thereby obtaining an integrally assembled overall structure,
said pinion shaft is radially supported by said steering body through radial support portions disposed at a distal end portion of said shaft away from said sleeve and at an end portion of said sleeve away from said pinion shaft,
said pinion shaft has an intermediate portion which is radially supported by said steering body through a radial support portion.

With this arrangement, when a large load acts on the pinion shaft to deform it by bending, the sleeve serving as the outer valve member constituting the rotary type channel selector valve is also deformed by bending. Then, decentering, offset contact, and the like occur between the sleeve and the rotor serving as the inner valve member, thus interfering with a smooth valve action.

In particular, in this rotary type channel selector valve, the rotor integral with the stub shaft of the steering wheel and the sleeve integral with the pinion shaft of the steering wheel must be combined such that they can concentrically, rotatably displace relative to each other and be disposed in the valve housing. This is because the oil pump serving as the fluid pressure generating source, the oil tank, the inlet port and the return port communicating with the left and right cylinder chambers constituting the power cylinder, and the channels serving as the right and left output ports are connected to each other by selectively connecting and disconnecting a plurality of channel grooves radially formed in the outer circumferential portion of the rotor and the inner circumferential portion of the sleeve to and from each other by relative rotational displacement between the rotor and sleeve, thereby selecting the channels of the fluid pressure circuit (hydraulic circuit).

In the rack-pinion type power steering apparatus described above, when the sleeve is integrally formed on the pinion shaft, a smooth valve action is hindered due to the reason described above. A countermeasure that can solve this problem is therefore sought for.

### Summary of the Invention

The present invention has been made in view of the above situation, and has as its object to provide a rack-pinion type power steering apparatus capable of improving workability and assembly in consideration of the structure of an overall apparatus, assuring good concentricity of the respective constituent components, and making the apparatus structure simple and compact.

The present invention has also been made in view of the above situation, and has as its object to provide a rack-pinion type power steering apparatus in which when a sleeve constituting a rotary type channel selector valve is to be integrally formed on a pinion shaft, bending deformation that occurs when a load acts on the pinion shaft is prevented to obtain appropriate rotational displacement between the pinion shaft and the rotor so that the valve action becomes smooth, thereby obtaining a smooth steering feeling.

In order to achieve the above object, according to the present invention, there is provided a rack-pinion type power steering apparatus according to claim 1.

According to the embodiment of the present invention, since the intermediate portion of the pinion shaft is radially supported by the steering body through the radial support portion having a bearing gap which is within the allowable bending stress of the pinion and slightly larger than those of the radial support portions at the two end portions of the pinion shaft, a large support strength can be maintained over the entire pinion shaft, and no problem occurs in the durability. In particular, in this arrangement, although the pinion shaft is supported at three apparent points, when the acting load is small, it is supported at two points in practice. Therefore, the valve action in travel along an almost straight road can be performed smoothly.

Since the radial support portion at the intermediate portion of the pinion shaft functions only when a large load acts, which does not much influence the steering feeling, even it the pinion shaft is received not by a comparatively expensive needle bearing but directly by a bush or the steering body, the steering feeling does not suffer.

### Brief Description of the Drawings

Fig. 1 is a sectional view of an apparatus main body portion showing a rack-pinion type power steering apparatus according to an embodiment of the present invention; and
Fig. 2A is a sectional view showing a stepped hole serving as the incorporating space of a steering body in Fig. 1;
Fig. 2B is a sectional view taken along the line II - II in Fig. 2A.

### Description of the Preferred Embodiments

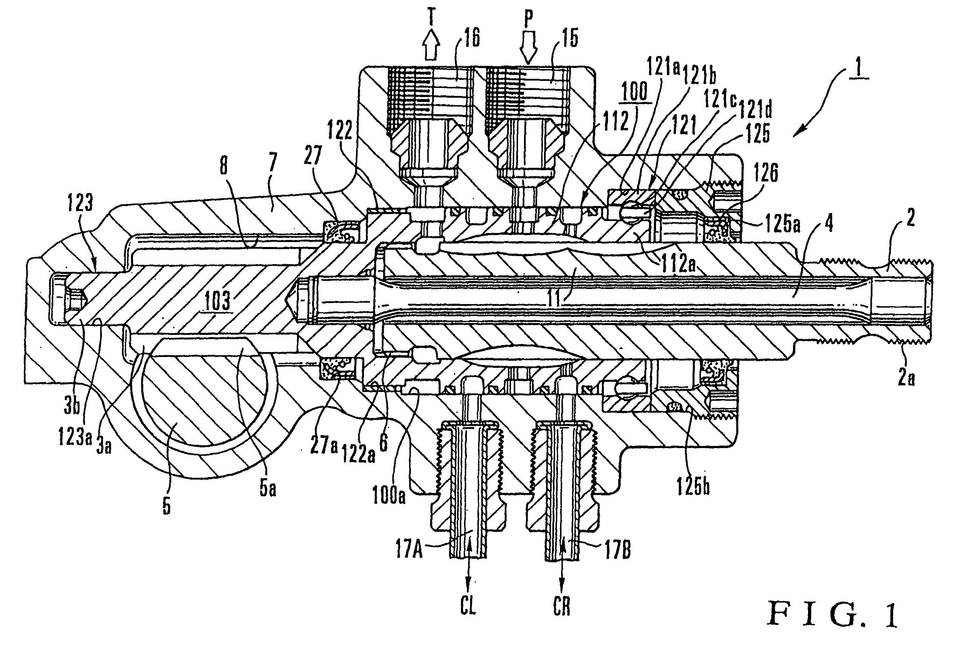

Fig. 1 shows a rack-pinion type power steering apparatus according to an embodiment of the present invention. In Fig. 1, reference numeral 1 denotes the power steering main body portion of the rack-pinion type power steering apparatus; 2, a cylindrical stub shaft serving as an input shaft connected to a steering wheel (not shown); 3, a pinion shaft; and 4, a torsion bar having one end fixed to one end of the stub shaft 2, extending toward the other end (to the left in Fig. 1) of the stub shaft 2, and connected to the pinion shaft 103 at its other end (inner end). A cylindrical rotor 11 is arranged to cover the torsion bar 4 along the extending direction of the torsion bar 4. Since it is integrally formed with the stub shaft 2, the rotor 11 is integrally connected to the stub shaft 2. A sleeve 112 is arranged around the rotor 11. The sleeve 112 has one end integrally formed with the pinion shaft 103 so that it is integrally connected to the pinion shaft 103. A rotary type channel selector valve 100 is formed between the rotor 11 and the sleeve 12. Pinion teeth 3a that mesh with rack teeth 5a on a rack 5 constituting a steering link mechanism (not shown) are formed on the pinion shaft 103.

Between the outer circumferential end of the rotor 11 away from the stub shaft 2 and the inner wall of the sleeve 112 near a portion integrally connected to the pinion shaft 103, a safety spline portion 6 constituted by projecting portions and groove portions is arranged as a fail safe mechanism that allows relative rotational displacement within a predetermined angular range caused by the torsion of the torsion bar 4.

The torsion bar 4 has the inner end pressed into and fixed with the pinion shaft 103 and an outer end extending through the stub shaft 2 to the outer end (right end) of the stub shaft 2. The stub shaft 2 is integrally connected to the torsion bar 4 at its serrated portion 2a to be coupled to the stub shaft 2 on the steering wheel side, through a welding means by, e. g., welding the entire circumferential portion of the serrated portion 2a to the torsion bar 4.

Conventionally, this portion is connected by driving a connection pin. In contrast to this, when connection is performed by welding the entire circumferential portion of the serrated portion 2a in this manner, hole formation and pin driving become unnecessary, and moreover an O-ring serving as a seal member also becomes unnecessary.

Reference numeral 7 denotes a steering body constituting the power steering main body portion. The steering body 7 is constituted by an integral structure serving also as a valve housing for the rotary type channel selector valve 100 (to be described later).

The stub shaft 2 and the pinion shaft 103 are rotatably supported by radial support portions where they are directly received by bearings (to be described later) and the steering body 7. Oil seals are interposed at appropriate positions of the stub shaft 2 and the pinion shaft 3.

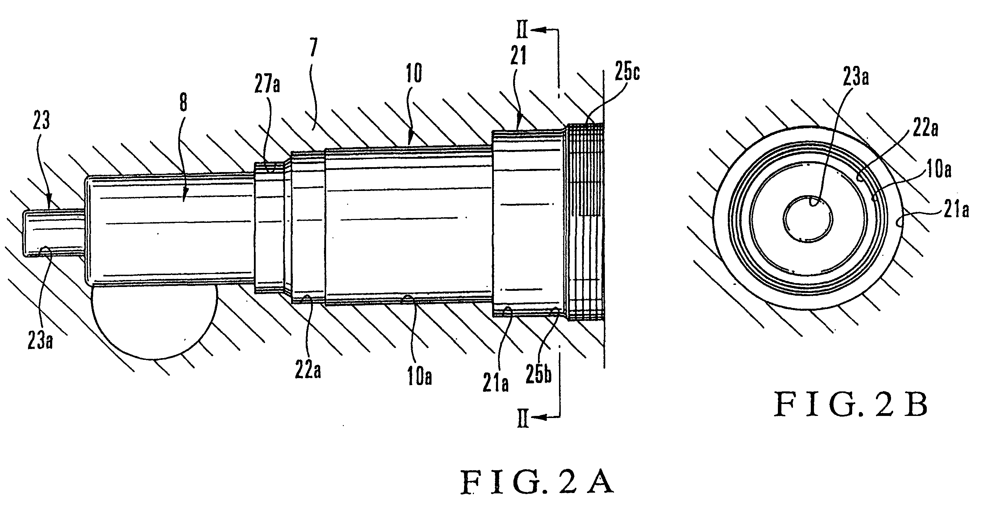

As shown in Figs. 2A and 2B, a space 8 for incorporating the stub shaft 2, the torsion bar 4, and the pinion shaft 3 is formed in the steering body 7 so as to reduce the inner diameter stepwise from one end to the other end on the stub shaft 2 side.

According to the present invention, in particular, the stepped hole 8 serving as the incorporating space is formed from one side of the steering body 7. The hole portions having different diameters can be formed to maintain perfect concentricity with high precision. In addition, working is also simple. The constituent components are incorporated in the assembled state in the stepped hole 8 open in one direction. Therefore, the assembly can be facilitated. In the assembled state, good concentricity of the respective components can be maintained.

In an incorporating space 8 in the steering body 7, the rotor 11 connected to the stub shaft 2 and constituting the rotary type channel selector valve 100 and the sleeve 112 integrally connected to one end of the pinion shaft 103 are arranged on the same axis so as to oppose each other. Channel selection between on oil pump P or an oil tank T (neither are shown) and left and right cylinder chambers CL and CR of the power cylinder is performed by relative rotational displacement (torsion of the torsion bar 4) of the rotor 11 and the sleeve 112, as is known widely. In order to perform this channel selecting operation, a plurality of channel grooves are formed at predetermined intervals in the radial direction as valve grooves in the outer and inner circumferential surfaces, respectively, of the rotor 11 and the sleeve 112 that oppose and are in slidable contact with each other. A plurality of fluid supply holes and fluid discharge holes are formed in appropriate portions of the outer and inner circumferential surfaces, respectively, of the rotor 11 and the sleeve 112 by boring. When these channel grooves and the like are selectively connected and disconnected, the hydraulic circuit is selectively controlled as required.

In Fig. 1, reference numeral 15 denotes an inlet port through which the hydraulic oil flows from the oil pump P; 16, a return port 16 through which the hydraulic oil returns to the oil tank T; and 17A and 17B, left and right output ports connected to the left and right cylinder chambers CL and CR, respectively, of the power cylinder. When the rotary type channel selector valve 100 (described above) rotationally displaces upon the steering operation, the hydraulic channels among these ports are arbitrarily connected and disconnected, thereby controlling generation of an auxiliary steering force in the power cylinder (not shown), as is known widely.

According to the present invention, the sleeve 112 consistuting a rotary type channel selector valve 100 is integrally formed on a pinion shaft 103, and is radially supported by a steering body 7 at the two end portions of the integral structure constituted by the pinion shaft 103 and the sleeve 112, i. e., radial support portions 121 and 123 formed on the distal end portion of the pinion shaft 103 away from the sleeve 112 and the end portion of the sleeve 112 away from the pinion shaft 103. The intermediate portion of the integral structure constituted by the pinion shaft 103 and the sleeve 112 is radially supported by the steering body 7 through an radial support portion 122 having a bearing gap which is different from that of the radial support portion 121 or 123. The radial support portion 121 is formed as a sliding bearing with a ball bearing. The radial support portion 123 is formed as a sliding bearing as it is directly received by a hole portion 123a of the stepped hole 8 in the steering body 7. The radial support portion 122 is formed as a sliding bearing with a bush. The ball bearing described above that forms the radial support portion 121 has an inner ring constituted by the end portion of the sleeve 112 integral with the pinion shaft 103, and particularly, the small-diameter cylindrical portion 112a formed at this end portion of the sleeves 112, and is constituted by a combination of a ball 121c and an outer ring 121b.

The intermediate portion of the pinion shaft 103 is radially supported by a hole portion 122a in the steering body 7 at the radial support portion 122 having a bearing gap which is within the allowable bending stress of the pinion shaft 103 and slightly larger than the bearing gap between the pinion shaft 103 and other radial support portions 121 and 123 formed at the two ends of this integral structure.

In Fig. 1, reference numeral 125 denotes a plug member incorporated in the steering body 7 to engage with the open end of the stepped hole 8 serving as an incorporating space. The inner end of the plug member 125 abuts against the outer ring 121b of a ball bearing 121, so that it is locked between the ball bearing 121 and the stepped portion formed by the hole portion 121a of the steering body 7.

The plug member 125 is formed with an opening that holds a stub shaft 2 while the stub shaft 2 extends through the opening. A holding groove 125a for holding an oil seal 126 is formed in the plug member 125. The stub shaft 2 is pivotally inserted into the steering body 7 through the oil seal 126, and is sealed by the oil seal 126. Another oil seal 127 is disposed also at a portion of the pinion shaft 103 nearer pinion teeth 3a than a bush 122. A working fluid is filled between the oil seals 126 and 127.

Since the bush 122 is located in this working fluid, it has an excellent bearing performance and an excellent durability.

With the arrangement described above, since the pinion shaft 103 is radially supported by the steering body 7 through the radial support portions (121, 122) at the two end portions of the integral structure constituted by the sleeve 112 and the pinion shaft 103 which pose the serious problem in the valve action, bending deformation particularly in the sleeve 112 is small and the valve action is smooth, thereby obtaining a smooth steering feeling.

In particular, even if a light load such as a bending force acts on the pinion shaft 103, only small bending deformation occurs in the sleeve 112, and the valve action of the rotary type channel selector valve 100 for obtaining an auxiliary steering force can be performed smoothly.

With the arrangement described above, even if a large load acts on the pinion teeth 3a of the pinion shaft 103, an influence on the sleeve 112 can be reduced by the radial support portion 122 at the intermediate portion, and the valve action at the sleeve 12 can be performed smoothly regardless of whether the load acts on the pinion teeth 3a.

Since the sleeve 112 constituting the rotary type channel selector valve 100 is integrally formed on the pinion shaft 103, the number of constituent components is small, and the number of portions to be worked is small, so that working and assembly operations are facilitated and the structure becomes simple. With this arrangement, backlash that poses a problem during operation does not occur between the pinion shaft 103 and the sleeve 112, and the rigidity becomes excellent. Furthermore, in the conventional general apparatus structure, for example, when the sleeve 112 is formed as a separate member and is connected to the pinion shaft 103, the size of the sleeve 112 and the pinion shaft 103 as a whole increases in the radial direction due to the presence of the connecting portion. Since the valve housing portion is formed separately from the steering body 7, the number of components increases, and the working and assembly operations become cumbersome. However, with the arrangement described above, these problems do not occur.

In particular, since the stepped hole 8 serving as the incorporating space in the steering body 7 where the pinion shaft 103 and the stub shaft 2 are incorporated can be formed to open only on the stub shaft 2 side and such that its diameter decreases stepwise toward its distal end, its inner diameter can be worked by one-directional boring. Also, the assembly operation can be performed easily by incorporating, mounting, and pressing the pinion shaft 103 and the stub shaft 2 from one direction. Therefore, automatic assembly is possible. Note that the stepped hole 8 is constituted by the hole portions denoted by reference numerals 123a, 27a, 100a, 121, and 125b.

In this embodiment, since the sleeve 112 is integrally formed on the pinion shaft 103 and the sleeve 112 is formed to have the same diameter as that of the large-diameter portion of the pinion shaft 103, the steering body 7 and the valve body can be integrally formed, and a reduction in size can be achieved. With this straight structure constituted by the pinion shaft 103 and the sleeve 112, a rotor 11 to be incorporated in this straight structure can be formed straight to have the same diameter as that of the stub shaft 2, thereby improving the workability of the stub shaft 2.

As described above, since the intermediate portion of the integral structure constituted by the pinion shaft 103 and the sleeve 112 is radially supported by the radial support portion 123 having a bearing gap slightly larger than that of the radial support portions (121, 123) described above, a large support strength can be maintained over the entire pinion shaft 103, and no problem occurs in the durability. In particular, in this arrangement, the pinion shaft 103 integrally formed with the sleeve 112 is supported at three apparent points, i. e., the two radial support portions (121, 123) at the two ends of the sleeve 112 and the radial support portion 122 at the intermediate portion of the pinion shaft 103. In practice, however, when, for example, the acting load is small, the pinion shaft 103 is supported at two points, i. e., at the two ends of the sleeve 112. Therefore, the valve action in travel particularly along an almost straight road can be performed smoothly.

Since the radial support portion 122 at the intermediate portion of the pinion shaft 103 functions only when a large load acts, which does not much influence the steering feeling, even if the pinion shaft 103 is received not by a comparatively expensive needle bearing but directly by a bush or the steering body 7, the steering feeling does not suffer.

In the embodiment described above, since the stepped hole 8 serving as the incorporating space is formed by boring the steering body 7 from the one-end side, the concentricity of the members incorporated in it can be maintained, and these members can be assembled easily. Furthermore, in this embodiment, the rotor 11 is radially supported on the inner circumferential portion of the sleeve 112 of the pinion shaft 103 to be integral with the stub shaft 2 through direct radial support. While the concentricity of the rotor 11 and the sleeve 112 is maintained by this direct radial support, the rotor 11 and the sleeve 112 can be pivotally supported by the steering body 7.

In this case, the slidable contact surface of either the rotor 11 or sleeve 112 may be subjected to friction decreasing treatment. As such friction decreasing treatment, for example, low-temperature sulfuric acid treatment, manganese phosphate treatment, gas soft nitriding treatment, Teflon dispersion type electroless nickel-phosphorus composite plating, molybdenum disulfide baking, Teflon coating, and plasma-CVD ceramic-based hard film treatment are possible, and either one of them may be performed. In particular, such rotor 11 and sleeve 112 pivot relative to each other only through a small angle. If the rotor 11 or the sleeve 112 is subjected to the surface treatment as described above, the apparatus becomes advantageous in terms of cost when compared to a case wherein a separate bearing is arranged.

The present invention is not limited to the structures described in the above embodiments, but the shape, structure, and the like of the respective portions of the power steering main body portion 1 of the rack-pinion type power steering apparatus can be modified and changed as required, as a matter of course. More specifically, in the embodiments described above, the rack-pinion type power steering apparatus is entirely examined, and the structure is simplified, the workability and the assembly are facilitated, and the cost is reduced. However, the present invention is not limited to this.

For example, the structure or the support structure of the stub shaft 2 and the rotor 11 constituting the rotary type channel selector valve 100, the shape and structure of the valve grooves and the fluid pressure channels of the rotary type channel selector valve 100 constituted by the rotor 11 and the sleeve 112, the rack 5, the support structure of the rack 5, and the like may be changed as required.

The ball bearing 121 using the sleeve 112 as the inner ring constitutes the radial support portion at the end portion of the sleeve 112 on the steering wheel side of the pinion shaft 103. However, the present invention is not limited to this, and a ball bearing whose inner ring is integrally fixed on the sleeve by a locking means, e.g., a snap ring, may be used.

The radial support portion at the radial center located on the sleeve 112 of the pinion shaft 103 on the pinion teeth 3a side is not limited to the bush 122, but may employ a bearing structure in which this radial center is directly received by a needle bearing or the steering body 7. The radial support portion 123 nearer the distal end portion 3b of the pinion shaft 103 than the pinion teeth 3a constitutes a bearing structure directly received by the body 7. However, this portion may constitute a bearing structure employing a bush or a needle bearing.

The distal end portion 3b located on the distal end side more than the pinion teeth 3a of the pinion shaft 103 may be formed with, e. g., a straight shape, a tapered shape in which the distal end is slightly so thin as to avoid striking of the distal end edge, or a curved shape in which the central portion is slightly thick.

## Claims

1. A rack-pinion type power steering apparatus comprising:
a cylindrical stub shaft (2) which rotates in a steering body (7) upon a steering operation;
a torsion bar (4) having one end fixed at one end of the said stub shaft (2) and extending through said stub shaft (2) toward the other end of said stub shaft (2):
a pinion shaft (103) pivotally connected to the other end of said torsion bar (4); a rotor (11) arranged to cover said torsion bar (4) from said stub shaft (2) along an extending direction of said torsion bar (4); and
a sleeve (112) having one end integrally connected to said pinion shaft (103), extending from said pinion shaft (3) along said stub shaft (2), and arranged around said rotor (11) to constitute a rotary type channel selector valve between said rotor (11) and said sleeve (112),
wherein said steering body (7) has a stepped hole (8) whose inner diameter increases stepwise from one end to the other end of said steering body (7) on a stub shaft side, and
said pinion shaft (103), said torsion bar (4), said stub shaft (2) are incorporated in said stepped hole (8), a plurality of portions in said stepped hole (8) are pivotally supported, and a set member(125) is fixed to an opening end of said stepped hole (18), thereby obtaining an integrally assembled overall structure,
said pinion shaft (103) is radially supported by said steering body (7) through radial support portions (123, 121) disposed at a distal end portion of said shaft (103) away from said sleeve (112) and at an end portion (121) of said sleeve (112) away from said pinion shaft,
said pinion shaft (103) has an intermediate portion which is radially supported by said steering body (7) through a radial support portion (122) having a bearing gap which is within an allowable bending stress of said pinion shaft (103) and slightly larger than a bearing gap of each of said other axial support portions (121, 123).

## Patentansprüche

1. Zahnstangen-Servolenkung, die folgendes umfasst:
Eine zylindrische Flanschwelle(2), die so ausgeführt ist, daß sie sich bei einem Lenkvorgang in einem Lenkkörper (7) drehen kann;
Einen Torsionstab (4), dessen eines Ende an einem Ende der Flanschwelle (2) befestigt ist und sich durch die Flanschwelle (2) hindurch in Richtung auf das andere Ende der Flanschwelle (2) erstreckt;
Eine Ritzelwelle (103) die drehbar mit dem anderen Ende des Torsionsstabs (4) verbunden ist;
Einen Rotor (11), der sich so erstreckt, daß er den Torsionsstab (4) von der Flanschwelle (2) entlang einer Erstreckungsrichtung des Torsionsstabs (4) abdeckt;
Eine Hülse (112) mit einem mit der Ritzelwelle (103) integral verbundenen ersten Endteil, die sich von der Ritzelwelle (3) entlang der Flanschwelle (2) erstreckt und um den Rotor (11) herum angeordnet ist und somit ein Drehkanal-Wählventil zwischen dem Rotor (11) und der Hülse (112) bildet;
wobei der Lenkkörper (7) eine abgestufte Bohrung (8), deren Innendurchmesser schrittweise vom einen Ende zum anderen Ende des Lenkkörpers (7) auf einer Flanschwellenseite sich schrittweise vergrößert und
die Ritzelwelle (103), der Torsionsstab (4), die Flanschwelle (2) in dieser abgestuften Bohrung (8) enthalten sind und dort drehbar gestützt werden und ein Einstellglied (125) an einem öffnungsende der abgestuften Bohrungen (18) befestigt ist, wodurch eine integral zusammengebaute Konstruktion erhalten wird und
die Ritzelwelle (103) radial vom Lenkkörper (7) durch radiale Stützbereiche (123, 121) abgestützt wird, die an einem distalen Endbereich der Welle (103) abgekehrt von der Hülse (112) und einem Endbereich (121) der Hülse (112) abgekehrt von der Ritzelwelle angeordnet sind, und
die Ritzelwelle (103) einen Mittenbereich aufweist, der radial durch den Lenkkörper (7) mittels eines radialen Stützbereichs (122) abgestützt ist, wobei dort ein Lager-Freiraum vorgesehen ist, der innerhalb einer zulässigen Biegebeanspruchung der Ritzelwelle (103) und wenig größer wie ein Lager-Freiraum jeder der anderen Stützbereiche (121,123) ist.

## Revendications

1. Dispositif de direction assistée du type à pignon et crémaillère, comprenant :
- un bout d'arbre cylindrique (2) qui tourne dans un corps de direction (7) lors d'une opération de conduite,
- une barre de torsion (4) qui a une extrémité fixée à une extrémité du bout d'arbre (2) et qui s'étend à travers le bout d'arbre (2) vers l'autre extrémité dudit bout d'arbre (2),
- un arbre de pignon (103) raccordé de manière pivotante à l'autre extrémité de ladite barre de torsion (4),
- un rotor (11) agencé pour couvrir ladite barre de torsion (4) par rapport au bout d'arbre (2) le long d'une direction d'extension de ladite barre de torsion (4), et
- une douille (112) qui a une extrémité raccordée d'une pièce à l'arbre de pignon (103), qui s'étend depuis l'arbre de pignon (3) le long du bout d'arbre (2) et qui est agencée autour dudit rotor (11) pour constituer une vanne de sélection à canaux de type rotative entre ledit rotor (11) et la douille (112),
- le corps de direction (7) présentant un trou à gradins (8) dont le diamètre intérieur augmente par paliers depuis une extrémité jusqu'à l'autre extrémité du corps de direction (7) sur un côté du bout d'arbre, et
- l'arbre de pignon (103), la barre de torsion (4), le bout d'arbre (2) étant incorporés dans le trou à gradins (8), une pluralité de portions du trou à gradins (8) étant supportées de manière pivotante, et un élément de réglage (125) étant fixé à une extrémité d'ouverture du trou à gradins (18), en obtenant par ce moyen une structure globale assemblée d'une pièce,
- l'arbre de pignon (103) étant supporté radialement par ledit corps de direction (7) par l'intermédiaire de parties porteuses radiales (123, 121) disposées en une partie d'extrémité distale dudit arbre (103), à l'écart de la douille (112), et en une partie d'extrémité (121) de ladite douille (112), à l'écart de l'arbre de pignon précité,
- l'arbre de pignon (103) ayant une partie intermédiaire qui est supportée radialement par le corps de direction (7) par l'intermédiaire d'une partie porteuse radiale (122) qui a un jeu de palier qui est dans une contrainte de flexion admissible de l'arbre de pignon (103) et légèrement plus grand qu'un jeu de palier de chacune des autres parties porteuses axiales (121, 123).
